(19) Europäisches Patentamt
European Patent Office
Office européen des brevets

(11) EP 4 166 400 A1

(12) **EUROPEAN PATENT APPLICATION**

(43) Date of publication:
**19.04.2023 Bulletin 2023/16**

(21) Application number: **21202930.0**

(22) Date of filing: **15.10.2021**

(51) International Patent Classification (IPC):
***B60T 7/22*** *(2006.01)*

(52) Cooperative Patent Classification (CPC):
**B60T 7/22;** B60T 2201/124

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Volvo Car Corporation**
**40531 Göteborg (SE)**

(72) Inventors:
• **FRIDÉN, Henrik**
**40531 Göteborg (SE)**

• **YANG, Derong**
**40531 Göteborg (SE)**

(74) Representative: **Maiwald GmbH**
**Elisenhof**
**Elisenstraße 3**
**80335 München (DE)**

Remarks:
Amended claims in accordance with Rule 137(2) EPC.

(54) **METHOD FOR PERFORMING BRAKE DISC CLEANING OF A VEHICLE**

(57)      The present disclosure relates to a method for performing brake disc cleaning of an at least partially electrically driven vehicle comprising a brake system with at least one friction brake, the surface of which can be brought into contact with a corresponding brake disc, the method comprises:

step S1: determining an upcoming brake event by using at least vehicle-ahead information,

step S2: predicting a needed deceleration level of an ego-vehicle by using the vehicle-ahead information, and
- step S3: carrying out a brake disc cleaning of the friction brake only in case the needed deceleration level of the ego-vehicle in the upcoming brake event is predicted as being above a predefined value.

Fig. 1

EP 4 166 400 A1

**Description**

TECHNICAL FIELD

The present disclosure relates to a method for performing brake disc cleaning of an at least partially electrically driven vehicle, a computer program element configured to carry out the method and an at least partially electrically driven electric vehicle comprising a control unit configured to carry out the method.

BACKGROUND ART

BEV (Battery Electric Vehicle) and PHEV (Plug-in Hybrid Electric Vehicle) cars with sizable electric machines see very little use of friction brakes since regenerative braking is prioritized and will cover most braking needs. When the requested deceleration reaches a certain level, part of the braking will be carried out by the friction brake.

Since hard braking is relatively seldom in the everyday driving, the friction brake is thus not sufficiently used, which results in rust at cold and damp brake discs.

Rust on brake discs will lead to significantly lower brake performance and thus unwanted longer brake distance. Another side effect is unpleasant noise at very low speeds (such as parking maneuvers), where friction brakes are still used, and even when brakes are not engaged.

Disc clean function is adopted in many EVs (Electric Vehicles) today by applying only friction brakes so that the cumulative sum of each brake event temperature rise is reached at the desired level, e.g. 100 degrees C. In this way, the brake disc rust problem can be mitigated. However, in this case, no/less recuperation is possible.

SUMMARY

Today, there is no specific selection of brake events when it comes to disc cleaning. The nominal way is to use friction brakes at regular intervals, even if some of these include SE:

low brake energy and are of little use. All brake events will be subject to friction brake application as soon as the disc clean function is activated. This strategy is very energy ineffective, specifically when considering the sharp demand of longer range in BEVs.

There may, therefore, be a need to provide an improved method for performing brake disc cleaning of an at least partially electrically driven vehicle.

The problem is at least partially solved or alleviated by the subject matter of the independent claims of the present disclosure, wherein further examples are incorporated in the dependent claims.

According to a first aspect, there is provided a method for performing brake disc cleaning of an at least partially electrically driven vehicle (ego-vehicle, host vehicle, own vehicle) comprising a brake system with at least one friction brake. A surface of the friction brake can be brought into contact with a corresponding brake disc. The method comprises, not necessarily in this order:

- Step S1: determining an upcoming brake event of the at least partially electrically driven vehicle by using at least vehicle-ahead information of a vehicle ahead.
- Step S2: predicting a needed deceleration level of the at least partially electrically driven vehicle by using the vehicle-ahead information.
- Step S3: carrying out a brake disc cleaning of the friction brake of the at least partially electrically driven vehicle only in case the needed deceleration level of the at least partially electrically driven vehicle in the upcoming brake event is predicted as being above a predefined value.

Hence, there is provided a smarter, e.g. more energy efficient, method for brake disc cleaning.

In an example, the vehicle-ahead information may include at least one of a number of conditions such as a time gap between the vehicle and the vehicle ahead, a predicted deceleration needed of the vehicle and a brake energy anticipated of the vehicle, etc., which is used for assessing braking conditions of the vehicle, i.e. for predicting a needed deceleration level of the vehicle. Therefore, vehicle-ahead information can be gathered by using several units of the -vehicle used for observation of the environment, e.g. cameras, radar sensors, sensors for determining acceleration etc.

In an example, further information may be combined with the vehicle-ahead information for determining an upcoming brake event of the at least partially electrically driven vehicle (in the following ego-vehicle). This further information comprises at least one of an adaptive regenerative braking force of the ego-vehicle and driver behavior information of the ego-vehicle such as actual pedal position. An adaptive regenerative braking function can be used as information source in order to indicate a potential level (force) of braking needed.

If the needed deceleration level of the ego-vehicle can be predicted to be above a certain value in an upcoming brake event of the ego-vehicle, thus gaining high brake energy, the brake disc cleaning can be carried out only at this type of brake event so that an unnecessary use of friction brakes can be minimized.

Further, in an example, the prediction of the needed deceleration level of the ego-vehicle may be carried out by determining a safety distance to the vehicle ahead, and/or calculating a corresponding regeneration brake force of the ego-vehicle, and/or determining a required braking force of the ego-vehicle based on the vehicle mass and/or an estimated road load, and/or determining a required brake energy and/or brake power of the ego-vehicle.

Determining a safety distance $d$ to the vehicle ahead can be done by multiplying the time gap $t_{gap}$ between the ego-vehicle and the vehicle ahead with the actual velocity $v_{ego}$ of the ego-vehicle:

$d = t_{gap} * v_{ego}$ The time gap $t_{gap}$ is calculated by a look-up-table, which depends on the ego-vehicle's actual speed, i.e. velocity $v_{ego}$.

For calculating an adaptive regeneration brake force of the ego-vehicle, the acceleration as needed to get zero relative velocity between the ego-vehicle and the vehicle ahead within a safety distance d when approaching the vehicle ahead is calculated by

$$a = \frac{v_{ahead}^2 - v_{ego}^2}{2d} > a_{pred} \quad \left[\frac{m}{s^2}\right]$$

where:

$v_{ahead}$ : velocity of the vehicle ahead
$a$ : acceleration needed to get zero relative velocity between the ego-vehicle and the vehicle ahead
$a_{pred}$ : predicted acceleration needed for activating brake disc cleaning of the ego-vehicle

Hence, the acceleration $a_{pred}$ is the acceleration needed for activating brake disc cleaning.

Determining a required braking force $F_{brake}$ of the ego-vehicle based on the vehicle mass *mass* and an estimated road load $F_{roadload}$, which is only estimated by a vehicle motion sensor such as an acceleration sensor etc., can be done by calculating:

$$F_{brake} = mass * a + F_{roadload}$$

The *roadload* can be calculated using a set of constants that are multiplied with the vehicle speed v both linear and squared: $F\_rl = c1 + c2 * v + c3 * v\^2$.

The needed brake energy $E_{brake}$ of the ego-vehicle depends on the brake disc temperature model readily available for each vehicle and can be determined by

$$E_{brake} = \frac{mass * (v_{ahead}^2 - v_{ego}^2)}{2} + F_{roadload} * d > E_{req} \quad [J]$$

where: $E_{req}$: predicted brake energy needed for brake disc cleaning of the ego-vehicle

The needed brake power $P_{brake}$ of the ego-vehicle is calculated by

$$P_{brake} = F_{brake} * r_W * \omega_{wheel} > P_{req} \quad [kW]$$

where:

$r_W$: effective wheel radius
$\omega_{wheel}$: deceleration when braking
$P_{req}$ : required brake power by the driver

Further, in an example, a brake event of the ego-vehicle may be triggered when at least one, some or all of the following conditions are fulfilled:

- the regeneration brake force of the ego-vehicle exceeds a predetermined level and/or rate,
- a determined speed difference between the ego-vehicle and the vehicle ahead exceeds a predetermined speed,
- an accelerator pedal release rate of the ego-vehicle exceeds a predetermined value, and
- a driver requested brake torque of the ego-vehicle exceeds a predetermined value.

In case a one pedal drive is applicable for the ego-vehicle, at least one of the following conditions may also need to be fulfilled:

- an accelerator pedal position of the ego-vehicle is below a predetermined value, and
- a driver requested brake torque rate of the ego-vehicle exceeds a predetermined value.

In another example, a computer program element is suggested, being configured to carry out a method as described above, when executed by a processor.

In another example, an at least partially electrically driven electric vehicle is suggested, comprising one or more units configured to acquire vehicle-ahead information, one or more units configured to acquire ego-vehicle information, and at least one control unit configured to carry out the method as described above.

The ego-vehicle information may at least comprise a pedal status and/or brake information and/or a regeneration brake force of the ego-vehicle.

BRIEF DESCRIPTION OF DRAWINGS

Exemplary examples of the invention will be described in the following with reference to the following drawings.

Fig. 1    shows a schematic diagram of an exemplary example of the method for performing brake disc cleaning.
Fig. 2    shows an abstract diagram of measurements of an adaptive regeneration force function of an exemplary example of the method for performing brake disc cleaning.

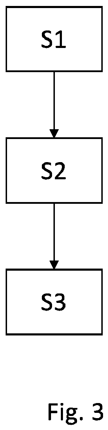

Fig. 3    shows steps of the method for performing brake disc cleaning of an exemplary example.

The figures are merely schematic representations and serve only to illustrate examples of the invention. Identical or equivalent elements are in principle provided with the same reference signs.

DESCRIPTION OF EXAMPLES

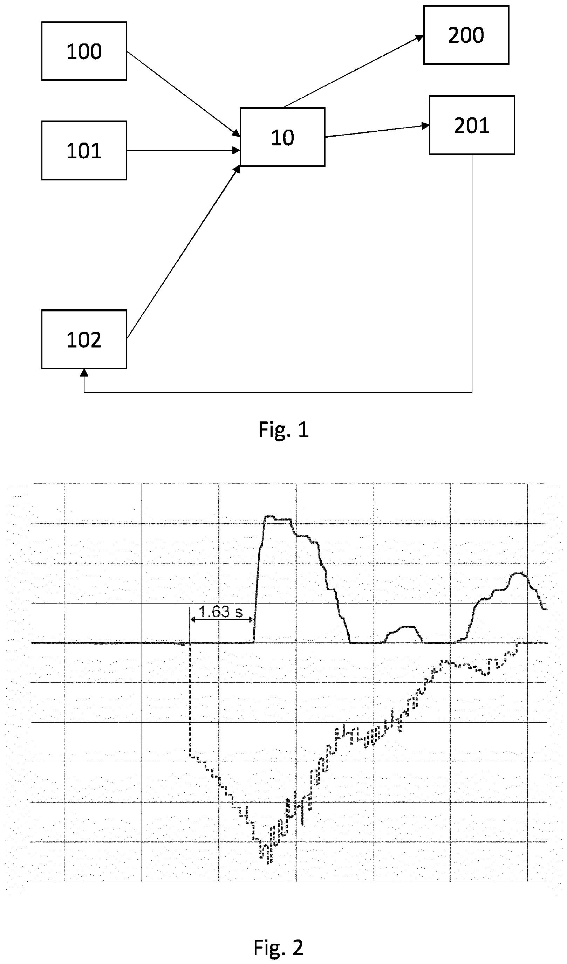

Figure 1 shows a schematic diagram of an exemplary example of the method for performing brake disc cleaning. Here, information is shown that is needed in order to carry out the prediction of the deceleration level in order to decide, whether a brake disc cleaning is to be done or not.

As can be seen, information is collected in a central module 10, which can process the information and also instruct the braking system 200, 201. The braking system 200, 201 is indicated as brake control module 200 for friction brakes, of which the brake discs need to be cleaned e.g. from rust, and an electric motor unit 201, which is responsible for regeneration braking. In order for the central module 10 to instruct the braking module 200, 201, information from units 100 for environmental observation such as cameras, radar and other sensors, as well as driver behavior information from unit 101 and needed brake energy from the brake disc model 102 of the vehicle are necessary.

Driver behavior information is mainly the status of the acceleration and brake pedals or from the single pedal, being adapted for accelerating and braking in case of a one pedal drive.

When all necessary information is available, the central module 10 calculates the predicted brake force (in N) and converts it into energy (in J). This energy is compared with needed brake energy (in J) for the upcoming brake event. Then, a level for friction brake torque as well as for regeneration brake torque is calculated.

As soon as the accelerator pedal is released or the brake pedal is pressed (in one pedal configuration only as soon as the pedal is released in a predetermined position), the request for applying the respective torques is sent to the modules 200 and 201 for acting accordingly, thus activating brake disc cleaning.

In one example, the following conditions need to be fulfilled to send the request:

- adaptive regeneration force has an absolute level of 1500N and a rate of >300 N/s,
- speed difference between ego-vehicle and vehicle ahead is >10 km/h, and
- accelerator pedal release rate is >X%/s and accelerator pedal position is < Y% (in one pedal drive), where X and Y are predefined values depending on the vehicle and its configuration, and
- driver requested brake torque is > V Nm and driver requested brake torque rate is >W Nm/s (in one pedal drive), where V and W are predefined values depending on the vehicle and its configuration.

In Figure 2, an abstract diagram of measurements of an adaptive regeneration force function of an exemplary example of the method for performing brake disc cleaning is shown. Here, the possible need to brake was registered (indicated by the dotted graph) about 1.63 seconds before the driver requested brake force (indicated with the rising flank of the continuous line). As can be seen, the release rate of accelerator pedal or driver brake request rise rate can be used as a hint/trigger of upcoming high deceleration demand, and thus prepare to engage friction brakes primarily in order to clean brake discs.

With the suggested method, it is possible to minimize the activation of disc cleaning application, by predicting the use of friction brake at upcoming brake events. Only in case a needed deceleration level of the vehicle is predicted as high enough (exceeding a predefined value) and thus high brake energy is expected in an upcoming brake event, the brake disc cleaning is carried out. Hence, the unnecessary use of friction brakes can be minimized.

Other variations to the disclosed examples can be understood and effected by those skilled in the art in practicing the claimed invention, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

LIST OF REFERENCE SIGNS

| | |
|---|---|
| 10 | central module |
| 100 | units for environmental observation |
| 101 | driver behavior information unit |
| 102 | brake disc model |
| 200 | brake control module |
| 201 | electric motor unit |
| S1-S3 | steps of the method |

**Claims**

1. A method for performing brake disc cleaning of an at least partially electrically driven vehicle comprising a brake system (200, 201) with at least one friction brake, a surface of the friction brake can be brought into contact with a corresponding brake disc,
   the method comprises:

   - determining (S1) an upcoming brake event of the at least partially electrically driven vehicle by using at least vehicle-ahead information of a vehicle ahead,
   - predicting (S2) a needed deceleration level of the at least partially electrically driven vehicle by using the vehicle-ahead information, and
   - carrying (S3) out a brake disc cleaning of the friction brake of the at least partially electrically driven vehicle only in case the needed deceleration level of the at least partially electrically driven vehicle in the upcoming brake event is predicted as being above a predefined value.

2. The method according to claim 1, the vehicle-ahead information comprising at least one of a time gap to the vehicle ahead, a predicted deceleration needed and a brake energy anticipated.

3. The method according to any of claims 1 or 2, further information comprising at least one of an adaptive regenerative braking force and a driver behavior information being combined with the vehicle-ahead information

4. The method according to any one of the preceding claims, the prediction of the needed deceleration level of the at least partially electrically driven vehicle being carried out by

   - determining a safety distance to the vehicle ahead, and

- calculating an adaptive regeneration brake force, and
- determining a required braking force based on the mass of the at least partially electrically driven vehicle and an estimated road load, and
- determining a required brake energy and brake power.

5. The method according to any one of the preceding claims, the brake event being triggered when at least one of the following conditions is fulfilled:

- the adaptive regeneration brake force exceeds a predetermined level and/or rate,
- a determined speed difference between the at least partially electrically driven vehicle and the vehicle ahead exceeds a predetermined speed,
- an accelerator pedal release rate exceeds a predetermined value, and
- a driver requested brake torque exceeds a predetermined value.

6. The method according to any one of claims 1 to 5, in case a one-pedal-drive is applicable, at least one of the following conditions needs to be fulfilled:

- the adaptive regeneration brake force exceeds a predetermined level and/or rate,
- a determined speed difference between the at least partially electrically driven vehicle and the vehicle ahead exceeds a predetermined speed,
- an accelerator pedal position is below a predetermined value, and
- a driver requested brake torque rate exceeds a predetermined value.

7. A computer program element being configured to carry out a method according to any one of claims 1 to 6, when executed by a processor.

8. An at least partially electrically driven electric vehicle comprising:

- one or more units configured to acquire vehicle-ahead information (100),
- one or more units configured to acquire vehicle information (101) of the at least partially electrically driven vehicle, and
- at least one control unit (10) configured to carry out the method according to any one of the claims 1 to 6.

**Amended claims in accordance with Rule 137(2) EPC.**

1. A method for performing brake disc cleaning of an at least partially electrically driven vehicle comprising a brake system (200, 201) with at least one friction brake, a surface of the friction brake can be brought into contact with a corresponding brake disc,
the method comprises:

- determining (S1) an upcoming brake event of the at least partially electrically driven vehicle by using at least vehicle-ahead information of a vehicle ahead,
- predicting (S2) a needed deceleration level of the at least partially electrically driven vehicle by using the vehicle-ahead information combined with at least one of an adaptive regenerative braking force and a driver behavior information, and
- carrying (S3) out a brake disc cleaning of the friction brake of the at least partially electrically driven vehicle only in case the needed deceleration level of the at least partially electrically driven vehicle in the upcoming brake event is predicted as being above a predefined value.

2. The method according to claim 1, the vehicle-ahead information comprising at least one of a time gap to the vehicle ahead, a predicted deceleration needed and a brake energy anticipated.

3. The method according to any of the claims 1 or 2, the prediction of the needed deceleration level of the at least partially electrically driven vehicle being carried out by

- determining a safety distance to the vehicle ahead, and
- calculating an adaptive regeneration brake force, and

- determining a required braking force based on the mass of the at least partially electrically driven vehicle and an estimated road load, and
- determining a required brake energy and brake power.

4. The method according to any one of the preceding claims, the brake event being triggered when at least one of the following conditions is fulfilled:

   - the adaptive regeneration brake force exceeds a predetermined level and/or rate,
   - a determined speed difference between the at least partially electrically driven vehicle and the vehicle ahead exceeds a predetermined speed,
   - an accelerator pedal release rate exceeds a predetermined value, and
   - a driver requested brake torque exceeds a predetermined value.

5. The method according to any one of claims 1 to 4, in case a one-pedal-drive is applicable, at least one of the following conditions needs to be fulfilled:

   - the adaptive regeneration brake force exceeds a predetermined level and/or rate,
   - a determined speed difference between the at least partially electrically driven vehicle and the vehicle ahead exceeds a predetermined speed,
   - an accelerator pedal position is below a predetermined value, and
   - a driver requested brake torque rate exceeds a predetermined value.

6. A computer program element being configured to carry out a method according to any one of claims 1 to 5, when executed by a processor.

7. An at least partially electrically driven electric vehicle comprising:

   - one or more units configured to acquire vehicle-ahead information (100),
   - one or more units configured to acquire vehicle information (101) of the at least partially electrically driven vehicle, and
   - at least one control unit (10) configured to carry out the method according to any one of the claims 1 to 5.

Fig. 1

Fig. 2

S1

S2

S3

Fig. 3

Europäisches
Patentamt

European
Patent Office

Office européen
des brevets

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 103 49 211 A1 (BOSCH GMBH ROBERT [DE]) 25 May 2005 (2005-05-25) | 1,2,4-7 | INV. B60T7/22 |
| Y | * paragraphs [0003], [0006], [0012] – [0014], [0016], [0018], [0031], [0033]; figures 1,2 * | 3,8 | |
| Y | US 2012/212353 A1 (FUNG KIN [US] ET AL) 23 August 2012 (2012-08-23) * paragraphs [0087], [0223] * | 3,8 | |
| A | US 9 932 034 B2 (JAGUAR LAND ROVER LTD [GB]) 3 April 2018 (2018-04-03) * column 1, lines 52-64 * * column 2, lines 34-51 * * column 25, lines 33-45 * * column 27, lines 27-53; figures 1-5 * | 1-8 | |

TECHNICAL FIELDS
SEARCHED        (IPC)

B60T
G01S
B60W

The present search report has been drawn up for all claims

| Place of search | Date of completion of the search | Examiner |
|---|---|---|
| Munich | 23 March 2022 | Hernandez-Gallegos |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 20 2930

This annex lists the patent family members relating to the patent documents cited in the above-mentioned European search report.
The members are as contained in the European Patent Office EDP file on
The European Patent Office is in no way liable for these particulars which are merely given for the purpose of information.

23-03-2022

| Patent document cited in search report | | | Publication date | Patent family member(s) | | Publication date |
|---|---|---|---|---|---|---|
| DE 10349211 | A1 | | 25-05-2005 | DE 10349211 A1 | | 25-05-2005 |
| | | | | WO 2005044652 A1 | | 19-05-2005 |
| US 2012212353 | A1 | | 23-08-2012 | AU 2012218054 B2 | | 23-10-2014 |
| | | | | CA 2826549 A1 | | 23-08-2012 |
| | | | | CN 103370252 A | | 23-10-2013 |
| | | | | EP 2675686 A1 | | 25-12-2013 |
| | | | | EP 3100927 A1 | | 07-12-2016 |
| | | | | JP 6410766 B2 | | 24-10-2018 |
| | | | | JP 6482096 B2 | | 13-03-2019 |
| | | | | JP 6860271 B2 | | 14-04-2021 |
| | | | | JP 2014511301 A | | 15-05-2014 |
| | | | | JP 2015110411 A | | 18-06-2015 |
| | | | | JP 2016186821 A | | 27-10-2016 |
| | | | | JP 2017200822 A | | 09-11-2017 |
| | | | | JP 2019023079 A | | 14-02-2019 |
| | | | | KR 20140007444 A | | 17-01-2014 |
| | | | | KR 20150032598 A | | 26-03-2015 |
| | | | | KR 20160055969 A | | 18-05-2016 |
| | | | | KR 20170130632 A | | 28-11-2017 |
| | | | | KR 20180127547 A | | 28-11-2018 |
| | | | | US 2012212353 A1 | | 23-08-2012 |
| | | | | US 2013245886 A1 | | 19-09-2013 |
| | | | | US 2014309881 A1 | | 16-10-2014 |
| | | | | US 2014371984 A1 | | 18-12-2014 |
| | | | | US 2016152233 A1 | | 02-06-2016 |
| | | | | US 2018072310 A1 | | 15-03-2018 |
| | | | | WO 2012112300 A1 | | 23-08-2012 |
| US 9932034 | B2 | | 03-04-2018 | EP 3107781 A1 | | 28-12-2016 |
| | | | | GB 2523199 A | | 19-08-2015 |
| | | | | US 2017066442 A1 | | 09-03-2017 |
| | | | | WO 2015124381 A1 | | 27-08-2015 |

EPO FORM P0459

For more details about this annex : see Official Journal of the European Patent Office, No. 12/82